# EUROPEAN PATENT APPLICATION

(11) **EP 1 775 862 A1**
(43) Date of publication of application: **18.04.2007**
(21) Application number: 05292175.6
(22) Date of filing: 14.10.2005
(51) Int. Cl.: H04B 10/158

(54) **Optical receiver and method of operating an optical receiver**

(71) Applicant: Alcatel Lucent, 75008 Paris (FR)
(72) Inventor: Idler, Wilfried, 71706 Markgröningen (DE)
(74) Representative: Schäfer, Wolfgang

(57) **Abstract**

The invention relates to an optical receiver (100) for receiving an amplitude modulated optical signal (s_1) having a first sideband and a second sideband, wherein said optical receiver (100) comprises an optical filter stage (10).

Said optical receiver (100) is characterized in that said optical filter stage (10) comprises a first filter element (10a) for filtering said first sideband and a second filter element (10b) for filtering said second sideband, and by a first photodetector (20a) associated to said first filter element (10a) and a second photodetector (20b) associated to said second filter element (10b).

## Description

The invention relates to an optical receiver for receiving an amplitude modulated optical signal having a first sideband and a second sideband, wherein said optical receiver comprises an optical filter stage.

The invention further relates to a method of operating an optical receiver for receiving an amplitude modulated optical signal having a first sideband and a second sideband.

It is an object of the present invention to improve an optical receiver and a method of the aforementioned type.

Regarding the optical receiver, said object is achieved by providing a first filter element for filtering said first sideband and a second filter element for filtering said second sideband within said optical filter stage, and by providing a first photodetector associated to said first filter element and a second photodetector associated to said second filter element.

Simulations have shown that the inventive configuration providing for separate processing of the first and second sideband yields a better performance regarding a signal to noise ratio (SNR) than prior art systems not providing for separate processing of said sidebands.

Furthermore, in contrast to transmission systems based on DPSK (differential phase shift keying), existing transmission systems capable of amplitude modulation can be used and thus also can take advantage of the inventive optical receiver. Amplitude modulation based transmission systems are less expensive than transmission systems comprising DPSK modulators or transmitters, respectively.

According to an advantageous embodiment of the present invention, a decider circuit is provided which is coupled to said first photodetector and said second photodetector. The decider circuit determines the state of the received optical signal by evaluating signals obtained from the photodetectors.

According to a further advantageous embodiment of the present invention, the first photodetector yields an inverted output signal, and the second photodetector yields a non-inverted output signal.

According to a further advantageous embodiment of the present invention, a subtractor is provided that receives at its inputs said inverted output signal and said non-inverted output signal, and the subtractor yields a corresponding difference signal at its output.

According to a further advantageous embodiment of the present invention, photodiodes of said first photodetector and said second photodetector are connected in series, which enables to provide a simple circuit layout for the photodetectors.

A further solution to the object of the present invention is given by a method of operating an optical receiver for receiving an amplitude modulated optical signal having a first sideband and a second sideband according to claim 6.

The inventive method is characterized by the following steps:
- filtering said optical signal by means of an optical filter stage comprising a first filter element for filtering said first sideband and a second filter element for filtering said second sideband, whereby a first optical sideband signal is obtained at an output of said first filter element, and whereby a second optical sideband signal is obtained at an output of said second filter element, and
- converting said first optical sideband signal to a first electrical sideband signal, and converting said second optical sideband signal to a second electrical sideband signal.

According to an advantageous embodiment of the inventive method, said first electrical sideband signal is added to said second electrical sideband signal whereby the SNR is increased regarding the processing of the resulting sum in a subsequent decider circuit.

A further advantageous embodiment of the present invention is characterized by inverting said first electrical sideband signal or said second electrical sideband signal. In this case, the first electrical sideband signal is preferably subtracted from said second electrical sideband signal or vice versa.

According to a further advantageous embodiment of the inventive method, said first electrical sideband signal and/or said second electrical sideband signal is amplified. Such amplification may e.g. be performed by a differential amplifier which implicitly subtracts the sideband signals. In this case, a single input decider circuit may be used.

When providing for separate amplification of each of the sideband signals, it is also possible to use a decider circuit that includes an adder or subtractor to implement the above functionality of combining said sideband signals.

Further details and advantages of the present invention are presented in the following detailed description with reference to the drawings, in which
Figure 1 depicts a first embodiment of an inventive optical receiver, and
Figure 2 depicts a flow chart of an embodiment of the inventive method.

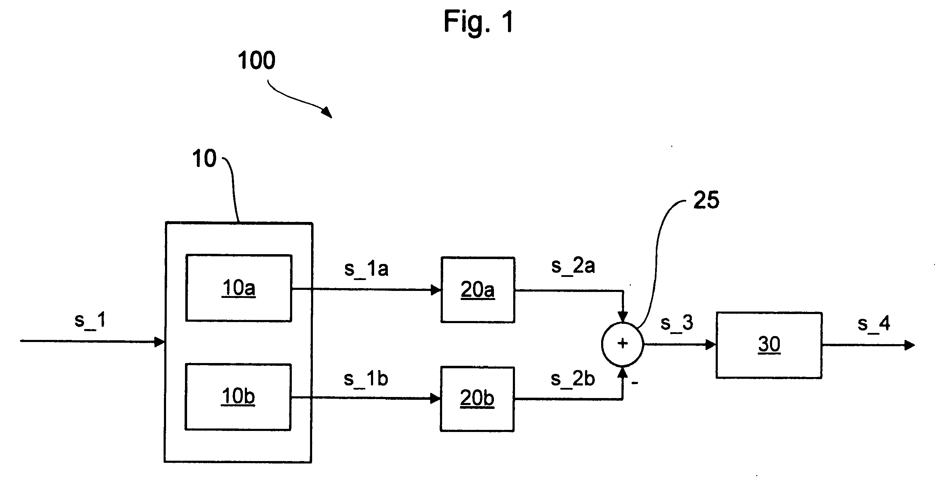

The inventive optical receiver 100 according to figure 1 receives at its input an amplitude modulated optical signal s_1. Said amplitude modulated optical signal s_1 is fed to an optical filter stage 10 which comprises a first filter element 10a and second filter element 10b.

Said first filter element 10a is designed as an optical bandpass filter which is configured to filter, i.e. separate, the first sideband of said amplitude modulated optical signal s_1 from the amplitude modulated optical signal s_1. The second filter element 10b is also designed as an optical bandpass filter. In contrast to said first filter element 10a, said second filter element 10b is configured to filter, i.e. separate, said second sideband of said amplitude modulated optical signal s_1 from said amplitude modulated optical signal s_1. Both filter elements 10a, 10b may e.g. be designed as narrowband interferometric filters, Mach-Zehnder filter structures or Fiber Bragg Gratings (FBG).

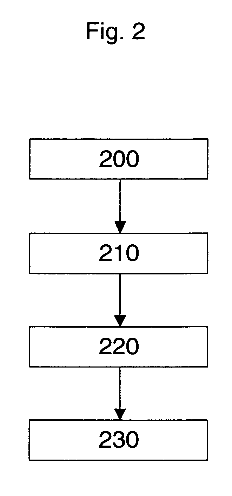

The inventive step of separating the first and second sidebands of said amplitude modulated optical signal s_1 is depicted by the block 200 of the flow chart according to figure 2. After said step of filtering 200, at an output of said first filter element 10a, a first optical sideband signal s_1a is obtained. In analogy, at an output of said second optical filter element 10b, a second optical sideband signal s_1b is obtained.

Each of said optical sideband signals s_1a, s_1b is subsequently forwarded to a respective photodetector 20a, 20b. According to the present invention, the photodetectors 20a, 20b perform a transformation of the respective optical sideband signal s_1a, s_1b to a corresponding first electrical sideband signal s_2a and second electrical sideband signal s_2b.

More specifically, said photodetectors 20a, 20b implement a per se known method of direct detection of said optical sideband signals s_1a, s_1b, whereby said optical sideband signals s_1a, s_1b are converted to an electrical current representing a corresponding data signal in the baseband, with which said amplitude modulated optical signal s_1 has been modulated before.

The respective steps of a photodetection are symbolized by block 210 of the flow chart of Figure 2.

According to the present embodiment of the inventive optical receiver 100, said first photodetector 20a does not provide for an inverted output signal s_2a, whereas said second photodetector used for demodulating said second optical sideband signal s_1b provides for an inverted output signal s_2b. I.e., if there is a high optical power level at an input of the first photodetector 20a, a corresponding output current or output voltage, respectively, does also have a high level, which e.g. represents the logical state "1". A low optical power level at an input of said first photodetector 20a correspondingly leads to an output current or voltage that represents the logical state "0". In comparison, the second photodetector 20b provides the respective inverted output signal.

According to figure 1, at an output of adder 25, a resulting signal s3 = s_2a - s_2b is obtained. After this step 220 (cf. Figure 2) of adding said electrical sideband signals s_2a, s_2b, the resulting signal s_3 is forwarded to a decider circuit 30 that is used for determining a state of said signal s_3, i.e. whether said signal s_3 corresponds to a logical "0" or to a logical "1" level.

At an output of said decider circuit 30, a respective digital demodulated signal s_4 is obtained.

In contrast to prior art approaches employing differential phase shift keying (DPSK) modulation formats which inter alia require expensive components such as Mach-Zehnder modulators, the inventive optical receiver 100 is compatible to existing optical transmission systems transmitters of which provide for e.g. on/off keying (OOK) modulation formats or other types of amplitude modulation based formats, while at the same time providing for an optimised usage of optical signal power because both sidebands of said amplitude modulated optical signal s_1 are used for determining a signal state of a received signal.

With the inventive optical receiver 100, a system gain of about 3dB can be achieved compared to currently deployed OOK modulation formats.

According to a further advantageous embodiment of the present invention, both photodetectors 20a, 20b provide for a non-inverted output signal s_2a, s_2b, which in this case may simply be added by an adder 25 in order to obtain the resulting signal -s_3.

A further very important advantage of the inventive optical receiver 100 is its simplicity, which inter alia results from requiring only one single decider circuit 30.

Yet another advantageous embodiment of the present invention provides for an amplification of said first electrical sideband signal s2_a and/or said second electrical sideband signal s2_b. It is also possible to perform said amplification, cf. step 230 of figure 2, by a differential amplifier (not shown) which implicitly subtracts the electrical sideband signal 2_a, 2_b so that an adder 25 (figure 1) need not be provided.

Furthermore, when providing for separate amplification of each of said electrical sideband signals s_2a, s_2b, it is also possible to use a decider circuit 30 that includes an adder or subtractor (not shown) to implement the above functionality of combining said electrical sideband signals s_2a, s_2b.

According to a further embodiment of the present invention, for filtering said amplitude modulated optical signal s_1 in order to obtain said optical sideband signals s_1a, s_1b, narrowband interferometric filters may be employed. Furthermore, it is also possible to use more sophisticated Mach-Zehnder structures or other suitable optical bandpass filters which also enable to separate the respective optical sideband signals s_1a, s_1b from the amplitude modulated optical signal s_1.

According to a further advantageous embodiment of the present invention, photodiodes of said first photodetector 20a and said second photodetector 20b are connected in series to each other, which enables to provide a simple circuit layout for the photodetectors (not shown). In this case, the photocurrents of the respective photodiodes are implicitly added to each other due to the series arrangement, and a respective voltage signal may be obtained from a series resistor which itself is connected in series to said photodiodes. I.e., according to this embodiment of the present invention, it is not necessary to provide for a separate adder 25 as depicted in Fig. 1, because the addition of the photocurrents is performed implicitly due to the series connection of both photodiodes.

Furthermore, with this embodiment of the present invention, it is sufficient to provide one single series resistor to obtain a voltage signal derived from the photocurrents of both photodiodes, whereas in other circuit layouts having two separate photodetectors 20a, 20b each of which has one photodiode, a separate resistor is to be provided for each photodiode. Apart from saving electrical components, the noise level of the aforedescribed inventive circuit is improved since only one resistor is used.

## Claims

1. Optical receiver (100) for receiving an amplitude modulated optical signal (s_1) having a first sideband and a second sideband, wherein said optical receiver (100) comprises an optical filter stage (10), said optical receiver (100) being **characterized in that** said optical filter stage (10) comprises a first filter element (10a) for filtering said first sideband and a second filter element (10b) for filtering said second sideband, a first photodetector (20a) associated to said first filter element (10a) and a second photodetector (20b) associated to said second filter element (10b).

2. Optical receiver (100) according to claim 1, **characterized by** a decider circuit (30) coupled to said first photodetector (20a) and said second photodetector (20b).

3. Optical receiver (100) according to one of the preceding claims, **characterized in that** the first photodetector (20a) yields an inverted output signal (s_2a) and **in that** the second photodetector (20b) yields a non-inverted output signal (s_2b).

4. Optical receiver (100) according to claim 3, **characterized by** a subtractor (25) that receives at its inputs said inverted output signal (s_2a) and said non-inverted output signal (s_2b), and that yields a difference signal (s_3) at its output.

5. Optical receiver (100) according to one of the preceding claims, wherein photodiodes of said first photodetector (20a) and said second photodetector (20b) are connected in series.

6. Method of operating an optical receiver (100) for receiving an amplitude modulated optical signal (s_1) having a first sideband and a second sideband, **characterized by** the following steps:
- filtering said optical signal (s_1) by means of an optical filter stage (10) comprising a first filter element (10a) for filtering said first sideband and a second filter element (10b) for filtering said second sideband, whereby a first optical sideband signal (s_1a) is obtained at an output of said first filter element (10a), and whereby a second optical sideband signal (s_1b) is obtained at an output of said second filter element (10b), and
- converting said first optical sideband signal (s_1a) to a first electrical sideband signal (s_2a), and converting said second optical sideband signal (s_1b) to a second electrical sideband signal (s_2b).

7. Method according to claim 6, **characterized by** adding said first electrical sideband signal (s_2a) to said second electrical sideband signal (s_2b).

8. Method according to claim 6, **characterized by** inverting said first electrical sideband signal (s_2a) or said second electrical sideband signal (s_2a).

9. Method according to claim 8, **characterized by** subtracting said first electrical sideband signal (s_2a) from said second electrical sideband signal (s_2b) or vice versa.

10. Method according to one of the claims 6 to 9, **characterized by** amplifying said first electrical sideband signal (s_2a) and/or said second electrical sideband signal (s_2b).
